# EUROPÄISCHE PATENTSCHRIFT

(11) **EP 1 273 900 B1**
(45) Veröffentlichungstag und Bekanntmachung des Hinweises auf die Patenterteilung: **30.11.2005**
(21) Anmeldenummer: 02022589.2
(22) Anmeldetag: 10.09.1997
(51) Int. Cl.: G01N 1/06, B23Q 3/154

(54) **Messerhalter für ein Mikrotom**
Knife holder for microtome
Support de couteau pour microtome

(30) Priorität: 30.09.1996 DE 19640045
(43) Veröffentlichungstag der Anmeldung: 08.01.2003
(62) Teilanmeldung aus: 97115684.9
(73) Patentinhaber: Microm International GmbH, 69190 Walldorf (DE)
(72) Erfinder: Berleth, Manfred, 69214 Eppelheim (DE); Heid, Hans, 69245 Bammental (DE)
(74) Vertreter: Weber, Walter

(56) Entgegenhaltungen:
- DE-A- 3 540 861
- US-A- 3 190 164
- US-A- 3 503 024
- US-A- 3 527 133
- US-A- 5 148 729

## Beschreibung

Die Erfindung betrifft einen Messerhalter für ein Mikrotom, bei dem im Basisteil des Messerhalters ein oder mehrere Magnete vorgesehen sind.

Bei bekannten Messerhaltern für Mikrotome wird das auswechselbare Messer oder der Klingenhalter für Einweg-Klingen zwischen einem Basisteil des Messerhalters und einer Klemmplatte mechanisch festgeklemmt. Für die Klemmbewegung zwischen dem Basisteil und der Klemmplatte kann dabei eine Exzenterwelle vorgesehen sein, die über einen Hebel betätigt wird. Derartige Messerhalter sind beispielsweise aus der DE-C2 35 40 861 oder aus der US-A 4,700,600 bekannt. Um das Messer oder den Klingenhalter bereits vor der eigentlichen Klemmung lagemäßig zu fixieren, können desweiteren schwache Permanentmagnete vorgesehen sein, die in Ausnehmungen in der Auflagefläche für das Messer bzw. den Klingenhalter eingeklebt sind.

Aus der US 3,190,164 ist ein Mikrotom bekannt, bei dem eine Platte, auf der das zu schneidende Präparat befestigt ist, mittels eines Magneten gehalten wird. Um einen sicheren Halt zu gewähren, befindet sich die vom Magneten gehaltene Platte in einer Umfassung. Damit die das Mikrotom bedienende Person eine Platte zum Wechseln greifen kann, ist an einer Seite der Umfassung ein Hebel angeordnet, mit dem eine befestigte Platte zum Ergreifen an einer Seite so weit gegen die Kraft des Magneten angehoben werden kann, bis sie sich nicht mehr in der Umfassung befindet. Der Messerhalter dieses Mikrotoms besteht aus einer Klemmhalterung mit Klemmschrauben.

Bei diesen bekannten Messerhaltern erweist sich die Klemmplatte bei der Abnahme der Schnitte häufig als störend, da die Rückenfläche des Messers für ein Auflegen eines Präparatträgers für die Schnittabnahme nicht frei zugänglich ist. Außerdem ist der Ein- und Ausbau des Messers umständlich, da das Messer entweder von der Seite oder von oben in den verbleibenden Schlitz zwischen dem Basisteil und der Klemmplatte hineingeschoben werden muß.

Aus der US 5,148,729 ist ein Messerhalter der eingangs genannten Art bekannt. Die Magnete dienen der Verhinderung einer Vertikalbewegung von Messerhalter und Messer. Sie sind in einem Abstand zum Messer angebracht und erlauben so eine horizontale Längsverschiebung von Messerhalter und Messer. Sie haben daher keine Arretierungsfunktion, sondern lassen die vorgenannte Längsverschiebung zu. Messer und Messerhalter werden hier jedoch durch ein keilförmiges Element abgedeckt, welches gemeinsam mit einer vor der Messerschneide vorgeordneten Schneidplatte eine hobelartige Gleitebene für das zu schneidende Präparat bildet, das gegen diese Gleitebene gedrückt wird. Da dieses keilförmige Element für einen Messerwechsel entfernt werden muß, ist auch hier kein einfacher und schneller Messerwechsel möglich. Ein weiterer Nachteil besteht darin, daß sich die sehr empfindlichen Schnitte nicht in der bei Mikrotomen üblichen Art auf dem Messerrücken ablegen und dort leicht aufgenommen werden können, sondern durch einen Schacht fallen.

Desweiteren weisen Messerhalter üblicherweise einen sogenannten Fingerschutz auf. Ein solcher Fingerschutz kann dabei aus einem am Grundkörper des Messerhalters schwenkbar angelenkten U-förmigen Hebel bestehen, dessen die beiden U-Schenkel verbindendes Teil sich in einer Endlage über die Klinge des Messers erstreckt und dadurch ein unbeabsichtigtes Aufgreifen auf die Messerschneide verhindert.

Ziel der vorliegenden Erfindung ist ein Messerhalter für Mikrotome, bei dem der Bedienkomfort gegenüber bekannten Messerhaltern bezüglich des Ein- und Ausbaus des Messers verbessert ist.

Dieses Ziel wird erfindungsgemäß durch einen Messerhalter mit den Merkmalen des Anspruches 1 gelöst. Vorteilhafte Ausgestaltungen der Erfindung ergeben sich aus den Merkmalen der abhängigen Ansprüche.

Bei der Erfindung erfolgt die Arretierung des Messers bzw. des Klingenträgers durch Magnete, die im Basisteil des Messerträgers eingelassen sind und bei Betätigung eines Betätigungshebels derart bewegt werden, daß die Magnetkraft in einer Stellung des Betätigungshebels das Messer bzw. den Klingenhalter zuverlässig am Messerträger festhält und in einer anderen Stellung des Hebels das Messer bzw. den Klingenträger soweit freigibt, daß eine leichte Verschiebbarkeit des Messers gewährleistet ist. Der oder die Magnete können dazu in einer zur Auflagefläche für das Messer senkrechten Richtung beweglich im Basisteil aufgenommen sein. Für die Übertragung der Bewegung des Betätigungshebels in die lineare Bewegung des oder der Magnete kann eine Exzenterwelle vorgesehen sein, die im Grundkörper des Messerhalters drehbar gelagert ist und sich durch Langlöcher in den Magneten bzw. in den Trägern für die Magnete hindurch erstreckt. An den zu den Langlöchern korrespondierenden Stellen sind dann die Exzenter der Exzenterwelle vorgesehen.

Das Halten des Messers oder des Klingenhalters mittels Magnetkraft am Messerträger liefert gegenüber der sonst üblichen mechanischen Klemmung den Vorteil, daß keine zusätzlichen Klemmplatten erforderlich sind. Die Rückseite des Messers oder Klingenhalters ist dadurch für eine Schnittabnahme frei zugänglich. Der Ein- und Ausbau des Messers oder eines Klingenhalters kann einfach von oben erfolgen, indem dieses/dieser nur flach auf das Basisteil aufgelegt wird; ein Hineinschieben in einen Spalt ist nicht erforderlich. Außerdem liefert der klemmplattenfreie Messerträger eine größere Freiheit bei der Konstruktion und bei dem Einsatz von Klingenhaltern, da die Dicke der Klingenhalter nicht auf die üblichen Messerdicken abgestimmt zu sein braucht. Schließlich entfällt bei einem Wechsel zwischen Messern unterschiedlicher Dicke oder Keilwinkel auch das sonst häufig erforderliche Auswechseln der Klemmplatte, deren Formgebung an Dicke und Keilwinkel des eingesetzten Messers oder Klingenhalters anzupassen ist.

Bei einer Ausführungsform des erfindungsgemäßen Messerhalters erstreckt sich der Betätigungshebel für die Arretierung des Messers bzw. des Klingenhalters in der Position, in der eine Arretierung des Messers bzw. des Klingenhalters bewirkt wird, mindestens teilweise über die Schneide des Messers bzw. der Klinge und umgibt dabei die Schneide. Der zur Arretierung des Messers zu bedienende Betätigungshebel wirkt dadurch gleichzeitig als Fingerschutz, so daß bei arretiertem Messer oder Klingenhalter mindestens ein Teil der Messerschneide gegen einen unbeabsichtigten Aufgriff geschützt ist. Nach einem Messerwechsel oder einer Änderung der benutzten Messerstelle ist dadurch mit äußerst einfachen Mitteln stets ein Teil der Messerklinge abgedeckt, ohne daß ein zusätzliches Betätigungselement zu bedienen ist.

Bei einem weiterhin vorteilhaften Ausführungsbeispiel der Erfindung sind zwei voneinander unabhängig bewegbare Betätigungshebel an den beiden gegenüberliegenden Stirnseiten des Messerträgers vorgesehen. Es ist dann sowohl der linke Randbereich des Messers als auch der rechte Randbereich des Messers gegen einen unbeabsichtigten Aufgriff auf die Messerschneide geschützt. Ungeschützt verbleibt lediglich der zentrale Bereich des Messers, der beim Betrieb des Mikrotoms für die Schnitterzeugung genutzt wird. Der freiliegende Bereich der Messerschneide ist dadurch bei arretiertem Messer unabhängig von der Messerlänge stets gleich groß. Auch der Einsatz längerer Messer führt daher zu keiner Erhöhung des Verletzungsrisikos gegenüber dem Einsatz kürzerer Messer.

Die beiden sich über die Messer- oder Klingenschneide erstreckenden Betätigungshebel können dabei unabhängig voneinander gelagert sein und bewegungsmäßig mit unterschiedlichen Magneten gekoppelt sein. Insbesondere können auch zwei oder mehr Magnete mit der Bewegung eines jeden der beiden Hebel gekoppelt sein, so daß auch Messer unterschiedlicher Länge sicher am Messerträger gehalten werden.

Nachfolgend werden Einzelheiten der Erfindung anhand des in den Figuren dargestellten Ausführungsbeispiels näher erläutert. Es zeigen:
- **Fig. 1**: eine Aufsicht auf einen erfindungsgemäßen Messerträger mit daran aufgenommenem Schneidmesser in teilweisem Aufriß;
- **Fig. 2**: einen Schnitt durch den Messerträger in Figur 1 gemäß Schnittlinie II-II und
- **Fig. 3**: einen Schnitt durch einen Betätigungshebel des Messerträgers nach Figur 1.

Der erfindungsgemäße Messerträger erhält ein Basisteil 1, dessen zylindrische Rückenfläche in bekannter Weise verschwenkbar an einem am Mikrotom befestigten Aufnahmeteil 2 aufgenommen ist. Durch Verschwenkung des Basisteils 1 entlang der zylindrischen Rückenfläche ist der sogenannte Anstellwinkel des Messers, also die Orientierung der Messerschneide 29 relativ zu der zu schneidenden Probe, variierbar. Zum Festhalten einer eingestellten Stellung zwischen dem Basisteil 1 und dem Aufnahmeteil 2 ist eine bekannte Exzenterklemmung mittels einer Exzenterwelle 3a, 3b und eines Bedienhebels 4a, 4b vorgesehen.

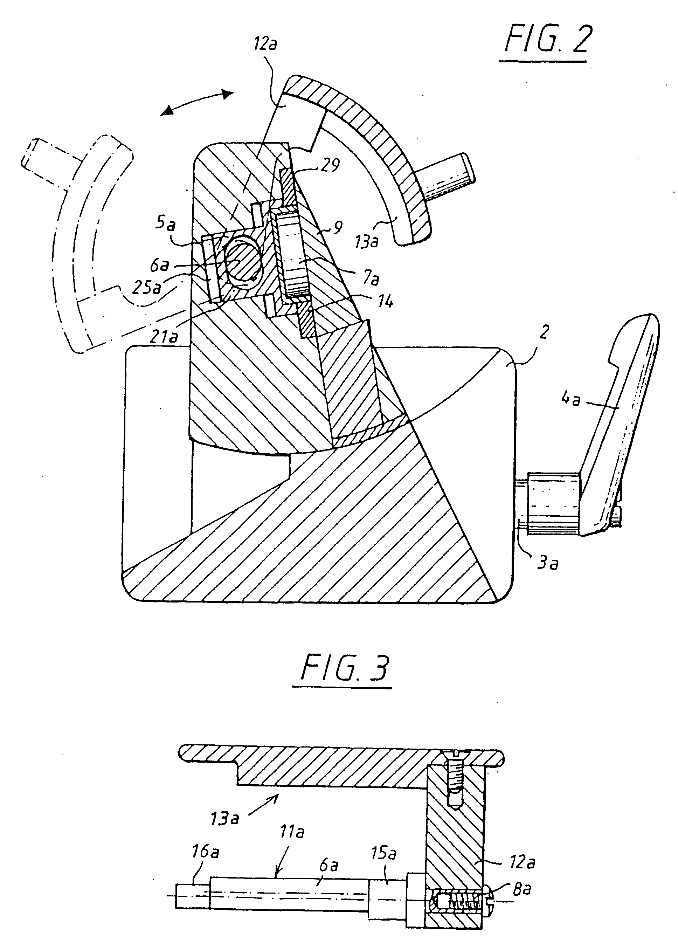

Das Basisteil 1 weist auf der Oberseite mehrere Ausfräsungen 25a, 25b auf, in die Aufnahmekörper 5a, 5b für starke Permanentmagnete 7a-7d hineingesteckt sind. Die Aufnahmekörper 5a, 5b weisen jeweils ein Langloch 21a, 21b in Längsrichtung des Basisteils 1, d.h. parallel zur Schneide 29 des aufzunehmenden Messers 9 auf. Auf jeder Seite des Basisteils 1 sind je zwei koaxiale Bohrungen 10b, 17b vorgesehen, in denen jeweils die Abschnitte 15a, 16a bzw. 15b, 16b der Exzenterwellen 11a, 11b gelagert sind (siehe auch Figur 3). Die exzentrisch zu den Abschnitten 15a, 16a bzw. 15b, 16b angeordneten Exzenter 6a, 6b der Exzenterwellen 11a,11b dienen zur Bewegung der Aufnahmekörper 5a, 5b und damit zur Bewegung der Magnete 7a-7d, um das Messer 9 in der eingestellten Position zu fixieren bzw. freizugeben. Die Betätigung der Exzenterwellen 11a, 11b erfolgt dabei mittels zweier Betätigungshebel 12a, 12b an den beiden Stirnseiten des Basisteils 1, die mit den Exzenterwellen 11a, 11b verbunden sind. Die beiden Betätigungshebel 12a, 12b weisen jeweils eine sich in Längsrichtung des Basisteils 1 erstreckende Verlängerung 13a, 13b auf, die als Segment einer Zylinderschale ausgebildet ist. Die Betätigungshebel einschließlich der Verlängerungen weisen dadurch einen L-förmigen Querschnitt auf. Der eine Betätigungshebel 12a dient dabei zur Bewegung zweier Permanentmagnete 7a, 7b auf der einen Seite des Basisteils 1 und der zweite Betätigungshebel 12b zur Bewegung der beiden auf der anderen Seite des Basisteils 1 angeordneten Permanentmagnete 7c, 7d.

Wie insbesondere aus der Figur 2 ersichtlich, ist die Oberseite des Basisteils 1 teilweise von einer Platte 14 aus nicht-ferromagnetischem Material, z.B. Messing, abgedeckt, die an den zu den Permanentmagneten 7a-7d korrespondierenden Positionen Löcher aufweist und deren Oberfläche mit der Oberfläche der Permanentmagnete fluchtet. Diese Platte 14 dient als Auflagefläche für das Messer 9. Da die Permanentmagnete 7a-7d einen geringeren Durchmesser als die Aufnahmekörper 5a, 5b für die Permanentmagnete aufweisen, dient die Abdeckplatte 14 gleichzeitig zum Halten der Permanentmagnete 7a-7d und der zugehörigen Aufnahmekörper 5a, 5b innerhalb der Ausfräsungen des Basisteils 1.

In der in der **Fig. 2** gestrichelt angedeuteten Stellung des Betätigungshebels 12a werden durch die Exzenterwelle 11a die beiden Permanentmagnete 7a, 7b gemeinsam mit ihrem Aufnahmekörper 5a um ca. 1 bis 2 Millimeter in das Innere des Basisteils 1 verschoben. Dadurch entsteht ein Luftspalt zwischen den Permanentmagneten 7a, 7b und dem Messer 9, wodurch wiederum die von den Permanentmagneten 7a, 7b auf das Messer 9 ausgeübte Magnetkraft stark abnimmt. Dasselbe gilt für die Permanentmagnete 7c, 7d bei entsprechender Schwenkstellung des zweiten Betätigungshebels 12b, 13b. In diesem Fall ist dadurch das Messer 9 leicht auf der Platte 14 verschiebbar; gleichzeitig verbleibt jedoch noch eine magnetische Restkraft, durch die das Messer 9 mit geringer Kraft gehalten und ein Herabfallen des Messers verhindert wird. Bei Verschwenkung der Betätigungshebel 12a, 13a in die in der Figur 2 durchgezogen dargestellten Stellung werden die Magnete 7a, 7b unmittelbar bis an die Basisfläche des Messers 9 herangeführt. Durch die dann wesentlich stärkere Magnetkraft zwischen den Permanentmagneten 7a, 7b und dem Messer 9 wird das Messer 9 dann fest an der Platte 14 des Messerträgers gehalten und ist in seiner Position relativ zur durch die Abdeckplatten 14a, 14b gebildete Auflagefläche fixiert. In dieser zweiten Schwenkstellung des Betätigungshebels 12a, 13a erstreckt sich die als Segment einer Zylinderschale ausgebildete Verlängerung 13a des Hebels 12a über die Randbereiche des Schneidmessers 9 entlang der Messerschneide 29 und deckt die die Schneide 29 aufweisenden Teile des Messers in diesen Randbereichen ab. Dadurch ist die Messerschneide 29 in diesen Randbereichen gegen einen unbeabsichtigten Aufgriff geschützt.

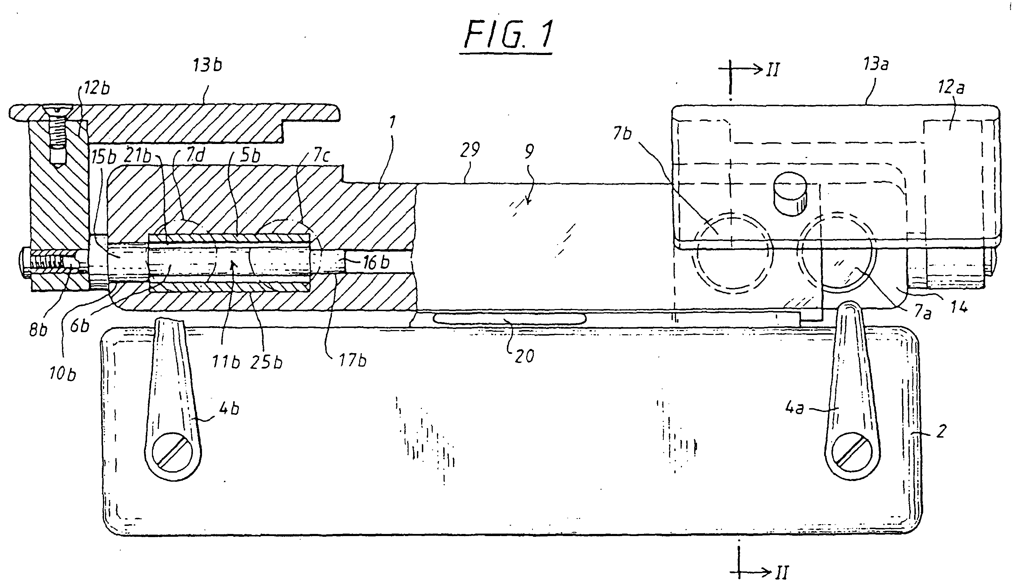

Wie in der **Fig. 1** dargestellt, sind auf jeder Längsseite des Basisteils 1 zwei Permanentmagnete 7a, 7b bzw. 7c, 7d vorgesehen. Jeder dieser Permanentmagnete 7a-7d ist bezüglich seiner Magnetkraft so ausgelegt, daß die von jeweils zwei Permanentmagneten auf das Messer 9 ausgeübte Kraft zum Halten des Messers 9 in der jeweiligen Position auch beim Schneiden des Präparates ausreicht. Deshalb kann das Messer 9, dessen Länge kürzer als die Länge des Basisteils 1 ist, in den unterschiedlichsten Positionen am Messerträger arretiert werden, so daß unterschiedliche Bereiche des Messers 9 zum Schneiden genutzt werden können. Ist die Schneidkante 29 des Messers 9 in einem Bereich abgestumpft, so braucht lediglich die Arretierung gelöst zu werden und das Messer parallel zur Schneidkante 29 verschoben und wieder arretiert zu werden.

Bei dem in der **Fig. 2** dargestellten Ausführungsbeispiel weist das Basisteil 1 im hinteren Bereich, also in dem Bereich, in dem das Basisteil 1 am Aufnahmeteil 2 aufgenommen ist, eine Öffnung 20 auf, die zum Absaugen von Schnittabfällen dient. Diese Öffnung 20 korrespondiert zu einer weiteren, hier nicht näher gezeigten Bohrung durch das Aufnahmeteil 2, deren Durchmesser so ausgelegt ist, daß auch in den unterschiedlichen Schwenkstellungen des Basisteils 1 relativ zum Aufnahmeteil 2 eine Verbindung zur Öffnung 20 gewährleistet ist. Die nicht gezeigte Bohrung ist in bekannter Weise an eine Absaugpumpe und einen Auffangbehälter für die Schnittabfälle angeschlossen.

Der erfindungsgemäße Messerhalter kann sowohl zur Aufnahme relativ dicker und nachschärfbarer Mikrotom-Messer, die üblicherweise aus magnetischem Material bestehen, als auch zur Aufnahme von Einwegklingen dienen. Bei Verwendung von Einwegklingen, die üblicherweise sehr dünn sind und selbst keine hinreichende Stabilität aufweisen, sind diese in einen Klingenhalter aus magnetischem Material aufzunehmen und es wird dann der Klingenhalter mit der darin aufgenommenen Einwegklinge durch die Magnetkraft der Permanentmagnete 7a-7d am Messerhalter fixiert.

Um beim Stillstand eines Mikrotoms mit einem erfindungsgemäßen Messerhalter auch einen Fingerschutz im mittleren Bereich der Messerschneide zu gewährleisten, ist zusätzlich ein in den Figuren nicht dargestellter, über den mittleren Teil der Schneide klappbarer Bügel am Basisteil oder an einem am Basisteil aufgenommenen Schnittstrecker vorgesehen. Das Vor- und Zurückschwenken diese Bügels erfordert jedoch einen zusätzlichen Bedienungsschritt.

Bei dem anhand der Figuren dargestellten Ausführungsbeispiel sind zwei Exzenterwellen 11a, 11b vorgesehen, so daß die Bewegung und das damit verbundene "Ein- und Ausschalten" der Permanentmagnete 7a, 7b und der beiden anderen Permanentmagnete 7c, 7d unabhängig voneinander erfolgt. Alternativ könnte auch eine einzige durch das Basisteil hindurchgeführte Exzenterwelle vorgesehen sein, so daß die Bewegung der beiden die Schneidkante 29 abdeckenden Betätigungshebel 12a, 13a und 12b, 13b miteinander gekoppelt ist. Die Bewegung beider Betätigungshebel 12a, 13a und 12b, 13b erfolgt dann jeweils simultan und ebenfalls simultan werden sämtliche Permanentmagnete 7a-7d vor- bzw. zurückbewegt.

Bei dem beschrieben Ausführungsbeispiel sind die sich über die Messerschneide erstreckenden Verlängerungen 13a, 13b als Zylindermantelsegmente ausgebildet. Alternativ kommen auch anders geformte Verlängerungen in Betracht, z.B. gebogenen oder abgewinkelte Bleche. Außerdem können an den Verlängerungen auch noch Griffe zur Betätigung der Hebel vorgesehen sein.

## Patentansprüche

1. Messerhalter für ein Mikrotom, bei dem im Basisteil (1) des Messerhalters ein oder mehrere Magnete (7a-7d) vorgesehen sind,
**dadurch gekennzeichnet,**
**daß** mindestens ein Betätigungshebel (12a, 12b) vorgesehen ist, dessen Betätigung eine Arretierung eines vom Messerhalter aufzunehmenden Messers (9) oder Klingenhalters am Messerhalter bewirkt, wobei die ein oder mehrere Magnete (7a - 7d) zur Arretierung des Messers (9) dienen und eine Bewegung des oder der Betätigungshebel (12a, 12b) eine Bewegung der Magnete (7a-7d) bewirkt, derart, daß die Magnetkraft in einer Stellung des Betätigungshebels (12a, 12b) das Messer (9) bzw. den Klingenhalter zuverlässig am Messerträger festhält und in einer anderen Stellung des Betätigungshebels (12a, 12b) das Messer (9) bzw. den Klingenträger soweit freigibt, daß eine leichte Verschiebbarkeit des Messers (9) gewährleistet ist.

2. Messerhalter nach Anspruch 1,
**dadurch gekennzeichnet,**
**daß** der oder die Betätigungshebel (12a, 12b) eine Verlängerung (13a, 13b) aufweisen, die sich in der eine Arretierung bewirkenden Position mindestens teilweise über die Schneide (29) des Messers (9) bzw. der Klinge erstreckt.

3. Messerhalter nach Anspruch 1 oder 2,
**dadurch gekennzeichnet,**
**daß** der Magnet oder die Magnete in einer Richtung senkrecht zur Auflagefläche für das Schneidmesser (9) beweglich im Basisteil (1) gelagert sind.

4. Messerhalter nach Anspruch 3,
**dadurch gekennzeichnet,**
**daß** die bewegungsmäßige Kopplung zwischen der Schwenkbewegung des oder der Betätigungshebel (12a, 12b) und der Bewegung des Magneten bzw. der Magnete (7a-7d) mittels Exzenterwellen (11a, 11b) erfolgt.

5. Messerhalter nach Anspruch 4,
**dadurch gekennzeichnet,**
**daß** die Exzenterwelle durch ein Langloch (21a, 21b) durch die Magnete oder durch Tragkörper (5a, 5b) für die Magnete (7a-7d) geführt ist.

6. Messerhalter nach einem der Ansprüche 1 bis 5,
**dadurch gekennzeichnet,**
**daß** zwei unabhängig von einander verschwenkbare Betätigungshebel (12a, 12b) vorgesehen sind.

7. Messerhalter nach Anspruch 1 bis 4,
**dadurch gekennzeichnet,**
**daß** ein erster Betätigungshebel (12a) bewegungsmäßig mit zwei Magneten (7a, 7b) und ein zweiter Betätigungshebel (12b) bewegungsmäßig mit zwei weiteren Magneten (7c, 7d) gekoppelt ist.

8. Messerhalter nach einem der Ansprüche 1 bis 6,
**dadurch gekennzeichnet,**
**daß** das sich parallel zur Schneide (29) des Messers (9) bzw. der Klinge erstreckende Hebelteil (13a, 13b) als Segment einer Zylinderschale ausgebildet ist.

9. Messerhalter nach einem der Ansprüche 1 bis 6,
**dadurch gekennzeichnet,**
**daß** das sich parallel zur Schneide (29) des Messers (9) bzw. der Klinge erstreckende Hebelteil (13a, 13b) bei eingelegtem Messer (9) oder Klingenhalter für die Arretierung des Messers (9) oder des Klingenhalters über die Schneide (29) bewegt wird und diese abdeckt.

## Claims

1. A knife holder for a microtome, comprising one or more magnets (7a - 7d) in the basic module (1) of the knife holder,
**characterized in that**
at least one operating lever (12a, 12b) is provided, the actuation of which causes arrestment of a knife (9) held in the knife holder or of a blade holder on said knife holder, and said one or more magnets (7a - 7d) serve to arrest said knife (9), and movement of said operating lever(s) (12a, 12b) effects movement of said magnets (7a - 7d) such that the magnetic force, in the one position of said operating lever (12a, 12b), locks said knife (9) or said blade holder on said knife holder in position and, in the other position of said operating lever (12a, 12b), unlocks said knife (9) or said blade holder so as to ensure that the position of said knife (9) can be shifted to a slight extent.

2. A knife holder as defined in claim 1,
**characterized in that**
said operating lever(s) (12a, 12b) have an extension (13a, 13b) which, in said arresting position, extends at least partially beyond the cutting edge (29) of said knife (9) or said blade.

3. A knife holder as defined in claim 1 or claim 2,
**characterized in that**
said magnet(s) are mounted in said basic module (1) for movement in a direction perpendicular to the bearing face for said knife (9).

4. A knife holder as defined in claim 3,
**characterized in that**
motion-entraining coupling between the swinging movement of said operating lever(s) (12a, 12b) and the movement of the magnet(s) (7a - 7d) is effected by means of camshafts (11a, 11b).

5. A knife holder as defined in claim 4,
**characterized in that**
said camshaft is guided through an oblong hole (21 a, 21 b) through said magnets or through supporting bodies (5a, 5b) for said magnets (7a to 7d).

6. A knife holder as defined in any one of claims 1 to 5,
**characterized in that**
two operating levers (12a, 12b) are provided which can be swung independently of one another.

7. A knife holder as defined in any one of claims 1 to 4,
**characterized in that**
a first operating lever (12a) is coupled to two magnets (7a, 7b) for motion-entrainment thereof and a second operating lever (12b) is coupled to two further magnets (7c, 7d) for motion-entrainment thereof.

8. A knife holder as defined in any one of claims 1 to 6,
**characterized in that**
the lever part (13a, 13b) extending parallel to the cutting edge (29) of said knife (9) or said blade is in the form of a segment of a cylindrical shell.

9. A knife holder as defined in any one of claims 1 to 6,
**characterized in that**
when said knife (9) or said blade holder is in place, the lever part (13a, 13b) extending parallel to the cutting edge (29) of said knife (9) or to said blade is moved over, and covers, said cutting edge (29) for arrestment of said knife (9) or said blade holder.

## Revendications

1. Porte-couteaux pour un microtome, dans lequel il est prévu, dans la partie de base (1) du porte-couteau, un ou plusieurs aimants (7a-7d),
**caractérisé en ce qu'**
il est prévu au moins un levier d'actionnement (12a, 12b) dont l'actionnement provoque un blocage d'un couteau (9) à loger sur le porte-couteau ou un porte-lame sur le porte-couteau, un ou plusieurs aimants (7a-7d) servant au blocage du couteau (9) et un déplacement du ou des leviers d'actionnement (12a, 12b) provoquent un déplacement des aimants (7a-7d) de sorte que la force magnétique maintient dans une position du levier d'actionnement (12a, 12b) le couteau (9) respectivement le porte-lames de manière fiable sur le porte-couteau et libère dans une autre position du levier d'actionnement (12a, 12b) le couteau 9 respectivement le porte-lames de sorte qu'un léger déplacement du couteau (9) est garanti.

2. Porte-couteaux selon la revendication 1, **caractérisé en ce que** le ou les leviers d'actionnement (12a, 12b) présentent un prolongement (13a, 13b) qui s'étend dans la position provoquant un blocage au moins partiellement sur le tranchant (29) du couteau (9) respectivement de la lame.

3. Porte-couteaux selon la revendication 1 ou 2, **caractérisé en ce que** l'aimant ou les aimants sont logés dans une direction perpendiculaire à la surface d'application pour le couteau (9) de manière mobile dans la partie de base (1)

4. Porte-couteaux selon la revendication 3, **caractérisé en ce que** l'accouplement mobile s'effectue entre le mouvement de basculement du ou des leviers d'actionnement (12a, 12b) et le mouvement de l'aimant respectivement des aimants (7a-7d) au moyen d'arbres excentriques (11a-11b).

5. Porte-couteaux selon la revendication 4, **caractérisé en ce que** l'arbre d'excentrique est guidé à travers un trou oblong (21a, 21b) par les aimants ou par des corps supports (5a, 5b) pour les aimants (7a-7d).

6. Porte-couteaux selon l'une des revendications 1 à 5, **caractérisé en ce qu'**il est prévu deux leviers d'actionnement (12a, 12b) pivotants indépendamment l'un de l'autre.

7. Porte-couteaux selon l'une des revendications 1 à 4, **caractérisé en ce qu'**un premier levier d'actionnement (12a) est couplé en mouvement avec deux aimants (7a, 7b) et un second levier d'actionnement (12b) est accouplé en mouvement ave deux autres aimants (7c, 7d).

8. Porte-couteaux selon l'une des revendications 1 à 6, **caractérisé en ce que** la partie de levier (13a, 13b) s'étendant parallèlement au tranchant (29) du couteau (9) respectivement de la lame est réalisée comme un segment d'une coque cylindrique.

9. Porte-couteaux l'une des revendications 1 à 6, **caractérisé en ce que** la partie de levier (13a, 13b) s'étendant parallèlement au tranchant (29) du couteau (9) respectivement de la lame est déplacée pour le blocage du couteau (9) ou du porte-lames sur le tranchant (29) et recouvre celle-ci, quand le couteau (9) ou le porte-lame est introduit
